# EUROPEAN PATENT APPLICATION

(11) **EP 0 763 712 A1**
(43) Date of publication of application: **19.03.1997**
(21) Application number: 96114155.3
(22) Date of filing: 04.09.1996
(51) Int. Cl.: G01C 21/20, B61L 3/00, B61L 25/02, G08G 1/0968

(54) **Vehicle navigator system**

(30) Priority: 18.09.1995 US 529558
(71) Applicant: UNION SWITCH & SIGNAL Inc., Pittsburgh, Pennsylvania 15219 (US)
(72) Inventor: Giras, Theo C., Pittsburgh, Pennsylvania 15238 (US); Gunnarsson, Kristjan, Pittsburgh, Pennsylvania 15206 (US); Boyle, Franklin, Pittsburgh, Pennsylvania 15237 (US)
(74) Representative: Weisert, Annekäte, Dipl.-Ing. Dr.-Ing.

(57) **Abstract**

A vehicle navigator system for monitoring the state characteristics of a vehicle traveling on a vehicle route is disclosed. In particular, the vehicle navigator system may utilize a measuring device such as an inertial measurement unit and a navigator on board the vehicle to calculate state characteristics of the vehicle. The vehicle navigator system may utilize a plurality of physical tags and a Global Positioning System to assist with the collapsing of accumulated error within the vehicle navigator system. The accuracy of the vehicle navigational system is increased with the number of physical tags positioned along the vehicle route. The vehicle navigator system in accordance with the present invention additionally includes a pattern recognition analyzer such as a neural network to calculate a plurality of virtual tags adjacent the vehicle route for increasing the accuracy of the system without increasing the number of physical tags utilized in the system.

## Description

### BACKGROUND OF THE INVENTION

### 1. Field of the Invention

The present invention relates to vehicle navigator systems and more particularly, to vehicle navigator systems which utilize physical tags and virtual tags in order to enhance the state information obtained from the navigation system.

### 2. Description of the Prior Art

In general, there has been an increasing interest in navigation systems and the applications thereof. More specifically, navigation systems provide vehicle state information which is useful for simultaneously monitoring numerous vehicles as well as controlling the routing and dispatching of the vehicles. Various navigation systems utilize a variety of instruments to monitor the movement and position of vehicles.

Traditionally, the position and speed of a transit vehicle were determined through the use of wheel mounted rotation sensors which counted the number of wheel revolutions and fractions thereof. An odometer would multiply the number of rotations by the wheel diameter or circumference to obtain a distance calculation. In addition, a tachometer could be utilized to multiply the wheel rotation count over a specific time interval by the wheel diameter or circumference and divide the result by the time interval to obtain the average speed of the vehicle over the time interval.

However, these instruments rely on mechanical contact between the vehicle and the operating environment and are therefore subject to slippage and error.

Some modem navigational systems, such as Global Positioning Systems, solve some problems inherent with the traditional instruments but also have drawbacks. For instance, the operational capabilities of Global Positioning Systems are limited by line-of-sight coverage, obstacles, foliage and terrain characteristics.

Other navigational systems follow a quasi-autonomous approach for obtaining measurement of vehicle velocity and position. For example, U.S. Patent No. 5,332,180, which is incorporated herein by reference, discloses a vehicle navigational system which utilizes on board inertial sensors to provide vehicle velocity and position information.

Alternatively, a dead-reckoning system could also be used to provide dynamic vehicle information. The non-contact, autonomous nature of inertial or dead-reckoning sensing provides an attractive method for measuring the state characteristics of vehicles. However, these systems accumulate error over time which must be collapsed to provide accurate, reliable, and useable information.

Various map matching techniques provide mechanisms for reducing error in navigational systems. Specifically, the vehicle state information from the navigational instruments may be compared to known data to provide estimates of location and velocity in order to reduce the error within the system.

U.S. Patent No. 5,332,180 discloses the utilization of physical tags and\or active beacons to perform the required error collapsing functions. The ability to reduce error is related to the number of physical tags used in the system and the error may be reduced at a rate proportional to the number of physical tags present in the navigational system.

However, the utilization of numerous physical tags or active beacons to reduce error within the system increases the maintenance in the system and opportunities for hardware failure. In addition, the traditional map matching methods have inherent accuracy and execution limitations.

### SUMMARY OF THE INVENTION

The invention provides a vehicle navigator system where the measurement of vehicle state characteristics is enhanced without the utilization of additional physical devices along the vehicle route.

The vehicle navigator system in accordance with the present invention preferably includes an inertial measurement unit for generating kinematic variables from the movement of the vehicle and a navigator for calculating measured state characteristics of the vehicle from the kinematic variables. The vehicle navigator system additionally includes a converter for generating a descriptor signature from the kinematic variables and a pattern recognition analyzer such as a neural network for matching the descriptor signature to a reference signature derived from a vehicle route profile survey. The matching of signatures enables the system to utilize virtual tags to more accurately estimate the state characteristics of the vehicle.

The vehicle navigator system may additionally include a plurality of physical tags located adjacent the vehicle route and a tag reader on board the vehicle for providing instantaneous state characteristics and collapsing the error accumulated within the system. The vehicle navigator system may include a Global Positioning System receiver for providing absolute state characteristics. The vehicle navigator system may additionally include a filter for more accurately estimating error within the system and enabling a more accurate accounting of the accumulated error.

Providing a neural network for generating virtual tags improves the accuracy of the vehicle navigator system without increasing the number of physical tags in the system. Reducing the number of physical tags is preferred in order to reduce system maintenance and the possibility of failure of one or more of the physical tags.

### BRIEF DESCRIPTION OF THE DRAWINGS

Figure 1 is a plan view of a main vehicle route having side route;
Figure 2 is a functional block diagram of the vehicle navigator system in accordance with the invention;
Figure 3a is schematic diagram of a neural network which may be utilized to estimate state characteristics of the vehicle;
Figure 3b is a schematic diagram similar to Figure 3a of a recurrent neural network; and
Figure 4 is a flow chart of a process of collapsing error within the vehicle navigator system through the use of virtual tags.

### DESCRIPTION OF THE PREFERRED EMBODIMENTS

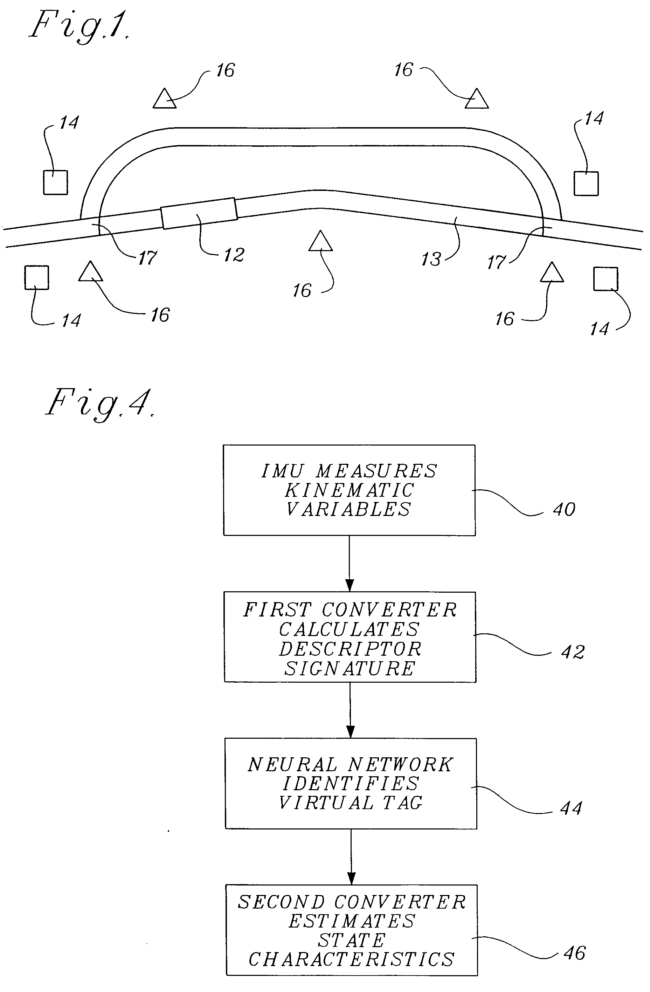

As shown in Figure 1, the vehicle navigator system 10 in accordance with the invention utilizes a plurality of physical tags 14 to provide positive position information of a vehicle 12 at a plurality of locations on a vehicle route 13. This information may be used by the vehicle navigator system 10 to collapse the accumulated error present within the system.

The vehicle navigator system 10 in accordance with the invention additionally utilizes a plurality of virtual tags 16 to provide a plurality of additional points where the accumulated error may be collapsed. The virtual tags 16 are calculated by a pattern recognition analyzer such as a neural network 22 and may be utilized to more accurately estimate the state characteristics of the vehicle 12 at a plurality of positions on the vehicle route 13.

The movement of the vehicle 12 on the vehicle route 13 is monitored by an inertial measurement unit 18 on board the vehicle 12. The inertial measurement unit 18 preferably includes at least one gyroscope and at least one accelerometer. The inertial measurement unit 18 may obtain kinematic variables including an instantaneous acceleration measurement and an instantaneous rotational rate measurement of the vehicle 12.

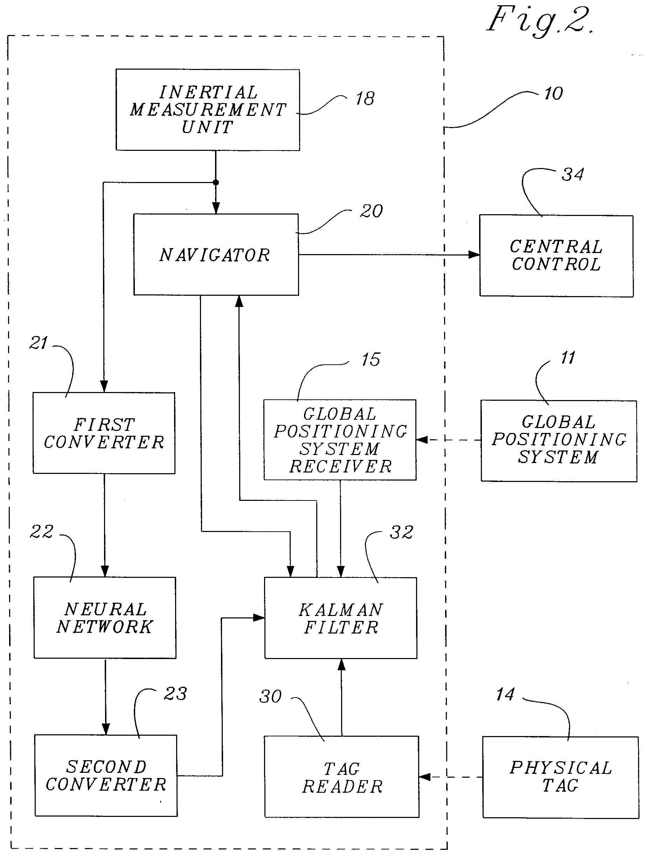

As shown in Figure 2, the output from the inertial measurement unit 18 is sent to a navigator 20. The navigator 20 may integrate the output of the accelerometer to calculate state characteristics such as velocity and position measurements of the vehicle 12. The navigator 20 may provide additional state characteristics including attitude information by integrating the rotational rate of the vehicle 12. The movement of the vehicle 12 along the vehicle route 13 may therefore be approximated by the inertial measurement unit 18 and the navigator 20. However, error in the data provided by the inertial measurement unit 18 and navigator 20 will increase as a function of time.

The vehicle navigator system 10 in accordance with the invention may utilize a variety of methods to reduce error which accumulates within the system. Specifically, the vehicle navigator system 10 may utilize a Global Positioning System or Differential Global Positioning System for updating the position of the vehicle 12. As shown in Figure 2, the vehicle navigation system 10 may include a Global Positioning System receiver 15 to receive absolute state characteristics from a Global Positioning System 11.

The vehicle navigation system 10 may additionally include a plurality of physical tags 14 located adjacent to the vehicle route 13 at a variety of positions thereof. The system employs the physical tags 14 to provide accurate instantaneous state information along the vehicle route 13.

As shown in Figure 1, physical tags 14 are preferably placed adjacent to switches 17 to provide reliable vehicle route information. The physical tags 14 may include transponders which transmit information such as tag number, vehicle route 13 identification, distance along the vehicle route 13 or longitude and latitude orientation.

Accordingly, the vehicle 12 may also include a tag reader 30 such as a transponder read\write device for detecting the presence of physical tags 14 along the vehicle route 13 and obtaining instantaneous vehicle route 13 information therefrom.

The information read by the tag reader 30 from the physical tags 14 may be utilized to reduce error which has accumulated within the vehicle navigator system 10 by updating the vehicle state characteristics such as position within the vehicle navigator system 10 to a high degree of certainty. In particular, each physical tag 14 provides a major error collapsing frame within the vehicle navigator system 10.

Therefore, it would appear to be favorable to provide numerous physical tags 14 along the travel route of the vehicle 12 at a plurality of positions to improve the accuracy of the navigation system. However, the use of physical tags 14 increases the system installation time and maintenance as well as the possibility of hardware failure.

The vehicle navigator system 10 in accordance with the invention utilizes a plurality of virtual tags 16 to provide additional points along the vehicle route 13 wherein accumulated error within the system may be reduced. The virtual tags 16 are established in the system by a neural network 22.

The neural network 22 determines the location of a plurality of virtual tags 16 along the vehicle route 13 through pattern recognition. Initially, the neural network 22 may be trained to recognize signatures which correspond to a plurality of positions on the vehicle route 13 traveled upon by the vehicle 12. A profile survey of the vehicle route 13 may be utilized to train the neural network 22.

The profile survey of the vehicle route 13 preferably includes a plurality of kinematic variables which correspond to a plurality of positions on the vehicle route 13. The kinematic variables from the profile survey of the vehicle route 13 are input to a first converter 21 where the kinematic variables are grouped into a plurality of reference signatures. The neural network 22 is trained to associate each reference signature with a specific position on the vehicle route 13. The reference signatures are preferably associated with curves and switches 17 wherein the inertial measurement unit 18 output is robust and easily distinguishable from other positions on the vehicle route 13. Furthermore, each reference signature may include a sequence of kinematic variables thereby enabling the neural network 22 to differentiate between similar signatures on the vehicle route 13.

The vehicle navigator system 10 additionally calculates a plurality of descriptor signatures as the vehicle 12 travels along the vehicle route 13. In particular, the kinematic variables from the inertial measurement unit 18 are applied to the first converter 21 wherein a plurality of descriptor signatures are generated.

The descriptor signatures are applied to the neural network 22 for comparing each descriptor signature with the plurality of reference signatures. The neural network 22 attempts to match each descriptor signature obtained from the output of the inertial measurement unit 18 with a reference signature obtained from the profile survey of the vehicle route 13. The second converter 23 may determine the location of a virtual tag 16 and thereby estimate the state characteristics of the vehicle 12 once the neural network 22 matches the descriptor signature with a reference signature. The utilization of virtual tags 16 provides a minor error collapsing frame within the vehicle navigator system 10 without the utilization of additional physical tags 14.

The output of the neural network 22 is applied to a second converter 23. The second converter 23 is configured to calculate estimated state characteristics which correspond to the identified virtual tag 16.

The first converter 21, the neural network 22 and the second converter 23 may be implemented in a processor on board the vehicle 12.

An example of the utilization of the vehicle navigator system 10 in a railway environment is shown in Figure 1. A switch 17 is located along the vehicle route 13 and a vehicle 12 passing over the switch may experience a sudden lateral movement. The sudden lateral movement will preferably be included in the profile survey of the vehicle route 13. Therefore, the first converter 21 will generate a unique reference signature which corresponds to the location of the switch 17 on the vehicle route 13 during the training of the neural network 22.

Furthermore, the lateral movement of a vehicle 12 passing over the switch 17 may be detected by the inertial measurement unit 18 on board the vehicle 12. The first converter 21 generates an individual descriptor signature which corresponds to the lateral movement of the vehicle 12 and the neural network 22 compares the descriptor signature with the reference signatures developed from the profile survey of the vehicle route 13. The neural network 22 matches the descriptor signature with the corresponding reference signature and identifies a virtual tag 16 corresponding to the location of the switch 17 on the vehicle route 13.

The output of the neural network 22 corresponding to the identified virtual tag 16 is subsequently forwarded to the second converter 23. The second converter 23 thereafter generates estimated state characteristics including location estimates of the vehicle 12 which may be utilized to collapse the error within the vehicle navigator system 10 without the use of additional physical tags 14.

The neural network 22 shown in Figure 3a may be utilized within the vehicle navigator system 10. The reference signatures corresponding to the profile survey of the vehicle route 13 are applied to an input layer 24 while the neural network 22 is in a training mode. In addition, the descriptor signatures determined from the movement of the vehicle 12 are applied to the input layer 24 when the neural network 22 is in a processing mode.

All signatures are received by a first set of processing units 27a or nodes within the input layer 24. The output from each processing unit 27a is applied to a second set of processing units 27b, which constitute a hidden layer 25, via a first set of connecting links 28a. The output from each processing unit 27b within the hidden layer 25 is applied to a third set of processing units 27c, which constitute an output layer 26, via a second set of connecting links 28b. The neural network 22 performs pattern recognition through the connecting links 28a, 28b between the layers 24, 25, 26. The output layer 26 sends an output signature to a second converter 23 in response to the matching of a descriptor signature and a reference signature and the output signature corresponds to the identified virtual tag 16.

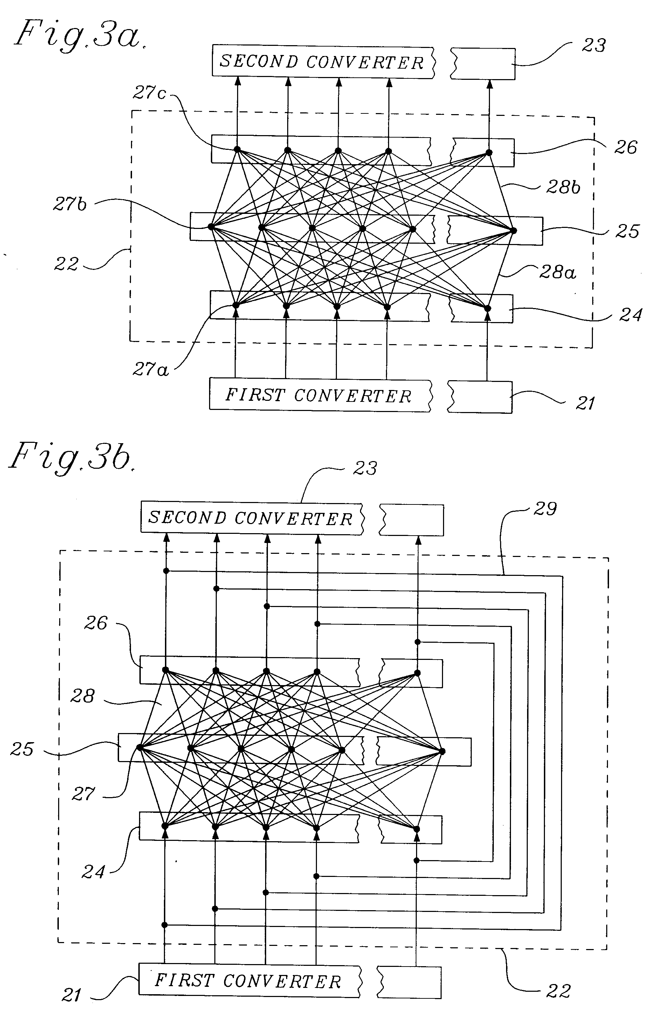

The neural network 22 may preferably include a recurrent neural network wherein the output of one of the layers is fed back into the input of the same or previous layer within the neural network 22 as shown in Figure 3b. The output is subsequently combined with the normal input of that layer or a previous layer to provide knowledge of the current and past inputs.

A recurrent neural network may be necessary to distinguish similar signatures within the profile survey of the vehicle route 13 and correctly calculate the virtual tags 16. The recurrent neural network may estimate the location and velocity of the vehicle 13 with an increased degree of certainty by recognizing descriptor signatures within a sequence of signatures. In addition, the utilization of a recurrent neural network enables the vehicle navigator system 10 to estimate future signatures based upon the present input and past input.

The neural network 22 shown in Figure 3a may be modified to form a recurrent neural network as shown in Figure 3b. Specifically, the neural network 22 functioning as a recurrent neural network would include a plurality of feedback connecting links 29 as shown in Figure 3b. The feedback connecting links 29 enable individual layers within the neural network 22 to process present and past data to improve the recognition accuracy of the neural network 22 and allow the neural network 22 to predict future signatures of the vehicle 12 on the vehicle route 13.

The process of utilizing the neural network 22 for calculating virtual tags 16 as minor error collapsing frames is shown in the flow chart in Figure 4. In the first step 40, the inertial measurement unit 18 measures kinematic variables corresponding to the movement of the vehicle 12. The first converter 21 in the next step 42 calculates a descriptor signature from the kinematic variables. In step 44, the neural network 22 compares the descriptor signature with a plurality of reference signatures generated from the profile survey of the vehicle route 13 and identifies a virtual tag 16 which corresponds to the matched signatures. In step 46, the second converter 23 calculates estimated state characteristics from the information corresponding to the identified virtual tag 16.

The state characteristics from the Global Positioning System receiver 15, navigator 20, second converter 23, and tag reader 30 may thereafter be applied to a recursive estimation filter as shown in Figure 2 to generate filtered state characteristics. The recursive estimation filter utilized by the vehicle navigator system 10 is preferably a Kalman filter 32.

The Kalman filter 32 combines the state characteristics from the Global Positioning System receiver 15, navigator 20, second converter 23 and tag reader 30 in order to estimate the error within the system. The Kalman filter 32 may also eliminate the past observed data as long as the previous data and present data from the Global Positioning System receiver 15, navigator 20, second converter 23 and tag reader 30 are known. Therefore, the Kalman filter 32 improves the overall efficiency and accuracy of the vehicle navigator system 10.

The Kalman filter 32 attempts to collapse or reduce error within the vehicle navigator system 10 by processing redundant state characteristics which are simultaneously measured from a plurality of sources. The Kalman filter 32 may be configured to assign independent weights to the state characteristics from each source depending upon the confidence level in the accuracy of the source.

In general, the instantaneous state characteristics provided by the physical tags 14 and the tag reader 30 are considered as a hard constraint and define a major error collapsing frame. The information from the virtual tags 16 is considered to be a delta correction to the physical tag 14 information and may defined as a minor frame correction.

The filtered state characteristics from the Kalman filter 32 are applied to the navigator 20. The navigator 20 collapses the error accumulated within the vehicle navigator system 10 based upon the filtered state characteristics. An error corrected output from the navigator 20 may next be forwarded to a central control 34 facility for vehicle monitoring or traffic control, or a display on the vehicle 12 for on board monitoring.

The vehicle navigator system 10 continuously monitors the movement of the vehicle 12 on the vehicle route 13 through the inertial measurement unit 18 and reduces the error with reference to the virtual tags 16 and physical tags 14.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting to the scope of the invention which is to be given the full breadth of the following claims and all equivalents thereof.

## Claims

1. A vehicle navigator system for determining at least one state characteristic of a vehicle traveling along a vehicle route, comprising:
a. a measuring device for generating at least one kinematic variable for defining the movement of such vehicle;
b. a navigator coupled with said measuring device for calculating at least one measured state characteristic from each of such at least one kinematic variable;
c. a first converter coupled with said measuring device for generating a descriptor signature from such at least one kinematic variable and a plurality of reference signatures from such vehicle route;
d. a pattern recognition analyzer coupled with said first converter for comparing such descriptor signature with such reference signatures; and
e. a second converter coupled with said pattern recognition analyzer for generating at least one estimated state characteristic which corresponds to such descriptor signature and such reference signature matched therewith;
wherein said navigator updates such at least one measured state characteristic with such at least one estimated state characteristic for reducing error within such vehicle navigator system.

2. The vehicle navigator system of claim 1 wherein each of such reference signatures corresponds to a segment of such vehicle route and includes a sequence of such at least one kinematic variable.

3. The vehicle navigator system of claim 1 further comprising a plurality of physical tags located adjacent such vehicle route at a plurality of positions thereof for providing at least one instantaneous state characteristic which corresponds to each of such positions on such vehicle route.

4. The vehicle navigator system of claim 3 further comprising a tag reader for reading such at least one instantaneous state characteristic from said physical tags.

5. The vehicle navigator system of claim 4 further comprising a Global Positioning System receiver for receiving at least one absolute state characteristic from a Global Positioning System.

6. The vehicle navigator system of claim 5 further comprising a filter coupled with said navigator and said second converter and said tag reader and said Global Positioning System receiver and said filter for analyzing such at least one measured state characteristic and such at least one estimated state characteristic and such at least one instantaneous state characteristic and such at least one absolute state characteristic and outputting at least one filtered state characteristic for updating such at least one measured state characteristic.

7. The vehicle navigator system of claim 6 wherein said first converter and said pattern recognition analyzer and said second converter are implemented in a processor.

8. The vehicle navigator system of claim 7 wherein said measuring device and said navigator and such processor and said tag reader and said Global Positioning System receiver and said filter are located on board such vehicle.

9. The vehicle navigator system of claim 1 wherein said pattern recognition analyzer is a neural network.

10. The vehicle navigator system of claim 9 wherein such neural network is a recurrent neural network.

11. The vehicle navigator system of claim 10 wherein such descriptor signature and such reference signatures include a sequence of such at least one kinematic variable.

12. The vehicle navigator system of claim 1 wherein said measuring device includes an inertial measuring device having at least one accelerometer and at least one gyroscope.

13. The vehicle navigator system of claim 6 wherein said filter is a recursive estimation filter.

14. The vehicle navigator system of claim 13 wherein such recursive estimation filter is a Kalman filter.

15. The vehicle navigator system of claim 14 wherein such descriptor signature and such reference signatures include a sequence of such at least one kinematic variable.

16. A train navigator system for determining at least one state characteristic of a train traveling along a set of spaced rails, comprising:
a. an inertial measurement unit for generating at least one kinematic variable for defining the movement of such train;
b. a navigator coupled with said inertial measurement device for calculating at least one measured state characteristic from each of such at least one kinematic variable;
c. a first converter coupled with said navigator for generating a descriptor signature from such at least one kinematic variable and a plurality of reference signatures from such vehicle route;
d. a neural network coupled with said first converter for comparing such descriptor signature with such reference signatures; and
e. a second converter coupled with said neural network for generating at least one estimated state characteristic which corresponds to such descriptor signature and such reference signature matched therewith;
wherein said navigator updates such at least one measured state characteristic with such at least one estimated state characteristic for reducing error within such train navigator system.

17. The train navigator system of claim 16 further comprising a plurality of transponders located adjacent such set of spaced rails at a plurality of positions thereof for providing at least one instantaneous state characteristic which corresponds to each of such positions on such set of spaced rails.

18. The train navigator system of claim 17 further comprising a transponder read\write device for reading such at least one instantaneous state characteristic from said transponders.

19. The train navigator system of claim 18 further comprising a Global Positioning System receiver for receiving at least one absolute state characteristic from a Global Positioning System.

20. The train navigator system of claim 19 further comprising a Kalman filter coupled with said navigator and said second converter and said transponder read\write device and said Global Positioning System receiver and said Kalman filter for analyzing such at least one measured state characteristic and such at least one estimated state characteristic and such at least one instantaneous state characteristic and such at least one absolute state characteristic and outputting at least one filtered state characteristic for updating such measured state characteristic.

21. A method of reducing error within a vehicle navigator system, comprising the steps of:
a. generating at least one kinematic variable to define the movement of a vehicle traveling along a vehicle route;
b. calculating at least one measured state characteristic from each of such at least one kinematic variable;
c. deriving a descriptor signature from such at least one kinematic variable;
d. defining a plurality of reference signatures based upon a plurality of segments of such vehicle route;
e. matching such descriptor signature with a corresponding reference signature;
f. converting such descriptor signature and such corresponding reference signature to at least one estimated state characteristic; and
g. updating such at least one measured state characteristic with such at least one estimated state characteristic.

22. The method of claim 21 further comprising the steps of:
h. receiving at least one instantaneous state characteristic from a plurality of physical tags adjacent such vehicle route at a plurality of positions thereof; and
i. modifying such at least one measured state characteristic with such at least one instantaneous state characteristic.

23. The method of claim 22 further comprising the step of filtering such at least one measured state characteristic and such at least one estimated state characteristic and such at least one instantaneous state characteristic to minimize error within such vehicle navigator system.

24. The method of claim 23 wherein such filtering is performed within a recursive estimation filter.

25. The method of claim 24 wherein such recursive estimation filter is a Kalman filter.

26. The method of claim 23 wherein each of said steps is performed on board such vehicle.

27. The method of claim 21 wherein said matching is performed within a neural network.

28. The method of claim 27 wherein said neural network is a recurrent neural network.

29. The method of claim 22 wherein such physical tags are a plurality of transponders and such at least one instantaneous state characteristic is received by a transponder read\write device located on such vehicle.
